# EUROPÄISCHE PATENTANMELDUNG

(11) **EP 4 403 300 A1**
(43) Veröffentlichungstag der Anmeldung: **24.07.2024**
(21) Anmeldenummer: 23152713.6
(22) Anmeldetag: 20.01.2023
(51) Int. Cl.: B23Q 7/04, B65G 61/00, B66C 13/46, B23Q 7/10

(54) **GERÄTESATZ, ANLAGE, AUTOMATISIERTER MASCHINENBETRIEB UND VERFAHREN ZUM BESCHICKEN UND ENTLADEN EINER BEARBEITUNGSMASCHINE**

(71) Anmelder: Hasiri Holding AG, 8450 Andelfingen (CH)
(72) Erfinder: Riedo, Lukas, 8462 Rheinau (CH)
(74) Vertreter: Keller Schneider Patent- und Markenanwälte AG

(57) **Zusammenfassung**

Die Erfindung betrifft einen Gerätesatz, eine Anlage, einen automatisierten Maschinenbetrieb und ein Verfahren zum Beschicken und Entladen einer Bearbeitungsmaschine. Hierbei wird sich eines fernsteuerbaren Krans bedient, den man ohnehin in typischen Produktionshallen antrifft. Erfindungsgemäss vermag eine Steuervorrichtung des Gerätesatzes einen Lastenträger eines Krans an eine gewünschte Position in einem Arbeitsbereich zu fahren, eine an den Lastenträger anbringbare Greifvorrichtung um eine vertikale Achse zu drehen und den Kran und die Greifvorrichtung entsprechend einem Bearbeitungsauftrag so anzusteuern, dass zum Beschicken der Bearbeitungsmaschine ein unverarbeitetes Werkstück von einer ersten Ablagestelle im Arbeitsbereich zur Bearbeitungsmaschine gebracht und dort in einer ersten Orientierung abgelegt wird, und dass zum Entladen der Bearbeitungsmaschine ein verarbeitetes Werkstück von der Bearbeitungsmaschine zu einer zweiten Ablagestelle im Arbeitsbereich gebracht und dort in einer zweiten Orientierung abgelegt wird.

## Beschreibung

### Technisches Gebiet

Die vorliegende Erfindung betrifft einen Gerätesatz, eine Anlage, einen automatisierten Maschinenbetrieb und ein Verfahren zum Beschicken und Entladen einer Bearbeitungsmaschine. Hierbei wird sich eines fernsteuerbaren Krans bedient, den man ohnehin in typischen Produktionshallen antrifft.

Im Besonderen handelt es sich bei der Bearbeitungsmaschine um eine Schneidemaschine und/oder bei zu bearbeitenden Teilen um Träger, Rohre oder Bleche.

### Stand der Technik

Aus dem Stand der Technik sind vollautomatische Beschickungsmaschinen bekannt, die etwa einen Turm mit einer Vielzahl an «Schubladen» aufweisen. In diesen Schubladen befinden sich verschiedene Rohlinge, d.h. unverarbeitete Werkstücke.

Die Kosten eines solchen Turms und eines dafür benötigten automatisierten Transportsystems sind immens und nehmen reichlich Platz in Anspruch - Platz, den man bei einem manuellen Betriebsmodus dann nicht mehr nutzen kann. Dadurch wird die Flexibilität bei der Beschickung reduziert, weil eine manuelle Beschickung entweder ganz verhindert, zumindest aber stark behindert wird. Die Möglichkeit, neben einem automatisierten Betriebsmodus auch noch einen manuellen Betriebsmodus zuzulassen ist gerade für kleinere Unternehmen mit auftragsorientierter Produktion (d.h. keine Massenproduktion) äusserst wichtig. Auch besteht in vielen Produktionshalle solcher «Job-Shops» gar kein Platz mehr für einen vollautomatische Beschickungsturm.

### Darstellung der Erfindung

Daher ist es eine Aufgabe der Erfindung, ein Beschickungssystem bereitzustellen, welches einen manuellen und einen automatisierten Betriebsmodus zulässt und die oben genannten Nachteile vermeidet.

Die Lösung der Aufgabe ist durch die Merkmale des Anspruchs 1 definiert. Gemäss der Erfindung weist ein Gerätesatz zum Beschicken und Entladen einer Bearbeitungsmaschine folgendes auf: (a) eine Greifvorrichtung, die an einem Lastenträger anbringbar, ferngesteuert aktivierbar und motorisiert um eine z-Achse drehbar ausgebildet ist, wobei der Lastenträger an einem Hubseil von einem verfahrbaren Wagen eines fernsteuerbaren Krans herunterhängt, so dass mit dem Lastenträger ein vorgegebener Arbeitsbereich in x-y-z-Richtung abgedeckt wird, (b) ein Überwachungssystem ausgebildet zum Erfassen des vorgegebenen Arbeitsbereichs, (c) eine Steuervorrichtung, die signaltechnisch mit dem Überwachungssystem, mit dem Kran und mit der Greifvorrichtung verbunden ist, und die dazu ausgebildet ist, (i) den Lastenträger an eine gewünschte Position im Arbeitsbereich zu fahren, (ii) die Greifvorrichtung zu aktivieren und um die z-Achse zu drehen und (iii) den Kran und die Greifvorrichtung entsprechend einem Bearbeitungsauftrag derart anzusteuern, dass zum Beschicken einer Bearbeitungsmaschine ein unverarbeitetes Werkstück von einer ersten Ablagestelle im Arbeitsbereich zur Bearbeitungsmaschine gebracht und dort in einer ersten Orientierung abgelegt wird, und dass zum Entladen der Bearbeitungsmaschine ein verarbeitetes Werkstück von der Bearbeitungsmaschine zu einer zweiten Ablagestelle im Arbeitsbereich gebracht und dort in einer zweiten Orientierung abgelegt wird.

Ein Vorteil, der sich aus der Erfindung ergibt, ist beispielsweise die Ausnützung mannarmer oder gar mannloser Arbeitsschichten (z.B. die Nacht) als Produktionszeitraum für einen Maschinenbetrieb, wobei kein Personal vorhanden sein muss und somit die Produktivität gesteigert wird. Ein Maschinenbetrieb umfasst insbesondere eine Produktionshalle mit mindestens einer Bearbeitungsmaschine.

Dabei wird die Flexibilität des Maschinenbetriebs am Tag beibehalten, weil keine die üblichen manuellen Vorgänge störende vollautomatisierte Anlage verbaut ist. Zudem ermöglicht die Erfindung gegenüber einer vollautomatisierten Anlage geringere Kosten und Risiken.

Eine Produktionshalle verfügt in den meisten Fällen über einen Kran, insbesondere Brückenkran, der um den erfindungsgemässen Gerätesatz nachgerüstet werden kann. Auch verfügt eine Produktionshalle über Flächen neben den Bearbeitungsmaschinen, die im üblichen Betrieb, d.h. insbesondere tagsüber, zumindest abschnittsweise besetzt oder verwendet werden, etwa als Verkehrsfläche, und entsprechend bei mannarmem/mannlosem Betrieb, d.h. insbesondere nachts, frei liegen.

Auf solchen Freiflächen kann also beispielsweise am Abend Rohmaterial, d.h. etwa Platten oder auch Rohre oder Träger, deponiert werden. Es handelt sich um die unverarbeiteten Werkstücke, die für die Bearbeitungsaufträge bestimmt sind, die über Nacht ausgeführt werden sollen.

Ein weiterer Vorteil der Erfindung ist, dass die zusätzlich vorzusehenden Komponenten im üblichen manuellen Betrieb nicht stören, weil sie nicht im Wege stehen, d.h. insbesondere dass man tagsüber normal weiter arbeiten kann, weil der Gerätesatz keinen zusätzlichen Platz beansprucht. Auch die Verkehrsfläche an der ersten Ablagestelle ist wieder frei, weil am nächsten Morgen alle unverarbeiteten Werkstücke abgearbeitet sind. Die verarbeiteten Werkstücke sind entweder bereits automatisiert abtransportiert worden, oder müssen noch manuell abtransportiert werden.

Auch wenn eine so erzielte «automatisierte Nachtschicht» nicht den Durchsatz der «manuellen Tagesschicht» erreicht, so bietet die Erfindung doch eine signifikante Produktivitätssteigerung, insbesondere da kein zusätzlicher Personalaufwand anfällt.

In manchen Ausführungsformen umfasst die Greifvorrichtung zumindest einen von einem Sauggreifer, einem Gabelgreifer und einem Magnetgreifer.

Insbesondere weist die Greifvorrichtung, im Falle des Magnetgreifers, mindestens einen aktivierbaren und deaktivierbaren Elektromagneten auf.

Insbesondere kann die Greifvorrichtung eine Kombination aus Sauggreifer und Gabelgreifer sein, wobei je nach Werkstück (unverarbeitet sowie verarbeitet) bei Bedarf die eine oder die andere Greiftechnik verwendet werden kann. Zum Beispiel ist die zumindest eine Greifgabel des Gabelgreifers schwenkbar angeordnet, wobei die Greifgabel derart ausschwenkbar ist, dass sie dem Sauggreifer freien Zugriff nach unten gewährt. So kann etwa das unverarbeitete Werkstück auf dem Weg von der ersten Ablagestelle zur Bearbeitungsmaschine mit dem Gabelgreifer gehandhabt werden und das verarbeitete Werkstück auf dem Weg von der Bearbeitungsmaschine zur zweiten Ablagestelle mittels des Sauggreifers - oder umgekehrt, je nach dem, wie es die Werkstückgeometrien zulassen bzw. erfordern.

Insbesondere kann die Greifvorrichtung eine Kombination aus Magnetgreifer und Gabelgreifer sein. Zum Beispiel ist die zumindest eine Greifgabel des Gabelgreifers schwenkbar angeordnet, wobei die Greifgabel derart ausschwenkbar ist, dass sie dem Magnetgreifer freien Zugriff nach unten gewährt.

Insbesondere kann die Greifvorrichtung eine Kombination aus Magnetgreifer, Sauggreifer und Gabelgreifer sein. Zum Beispiel ist die zumindest eine Greifgabel des Gabelgreifers schwenkbar angeordnet, wobei die Greifgabel derart ausschwenkbar ist, dass sie dem Magnetgreifer und dem Sauggreifer freien Zugriff nach unten gewährt. Saugnäpfe des Sauggreifers sind gegenüber einer Oberfläche des Magnetgreifers versenkbar, sodass ein reiner Magnetbetrieb ermöglicht ist. Im Saugbetrieb fahren die Saugnäpfe aus und der mindestens eine Elektromagnet des Magnetgreifers kann deaktiviert werden.

Insbesondere kann der Gerätesatz ein Greifvorrichtungsmagazin aufweisen, wobei die Greifvorrichtung am Lastenträger modular austauschbar ist. Die angebrachte Greifvorrichtung ist im Greifvorrichtungsmagazin ablegbar, wobei eine andere Greifvorrichtung aus dem Greifvorrichtungsmagazin an den Lastenträger anbringbar ist. Der Gerätesatz kann ausgebildet sein, diesen Greifvorrichtungswechsel automatisiert durchzuführen.

Insbesondere ist die Multifunktion der Greifvorrichtung bzw. die Wechselbarkeit der Greifvorrichtung nützlich, wenn die Handhabung etwa zwischen verschiedenen Werkstücktypen (Rohr, Blech, etc.) wechselt.

Insbesondere ist das verarbeitete Werkstück als die Summe eines Reststücks und den aus dem unverarbeiteten Werkstück herausgetrennten Bauteilen zu verstehen. Zum leichteren Abtransportieren kann die Bearbeitungsmaschine die Bauteile nicht komplett vom Restteil abtrennen, sondern noch einen Steg übriglassen, sodass das verarbeitete Werkstück als Ganzes gegriffen werden kann und die einzelnen Bauteile nicht herausfallen. Sind die Bauteile jedoch komplett vom Restblech gelöst bzw. getrennt, so kann die Greifvorrichtung derart ausgestaltet sein, dass alle Bauteile, insbesondere inklusive Restteil, in einem Griff aufgenommen werden können. Im Falle eines Sauggreifers würde dies bedeuten, dass eine genügend hohe Dichte an Saugnäpfen vorhanden ist. Im Falle eines Gabelgreifers würde dies bedeuten, dass eine genügend hohe Zinkendichte vorhanden ist. Im Falle eines Magnetgreifers würde dies bedeuten, dass eine genügend grosse Magnetfläche vorhanden ist.

Insbesondere ist die Steuervorrichtung dazu ausgebildet, die Greifvorrichtung um eine vertikale Achse (die z-Achse) zu drehen.

In manchen Ausführungsformen umfasst das Überwachungssystem mindestens eine ortsfest montierte oder an einem beweglichen Teil des Krans montierte Videokamera.

Insbesondere ist das Überwachungssystem dazu ausgebildet, die erste Ablagestelle, die zweite Ablagestelle und die Bearbeitungsmaschine zu überwachen, insbesondere zu verfolgen (z.B. durch feature tracking).

Insbesondere ist das Überwachungssystem dazu ausgebildet, eine relative Position zwischen der Greifvorrichtung und der ersten Ablagestelle bzw. der zweiten Ablagestelle bzw. der Bearbeitungsmaschine zu bestimmen (z.B. durch image resection bzw. Triangulation oder einen structure from motion Algorithmus oder einem simultaneous localization and mapping Algorithmus).

Insbesondere ist das Überwachungssystem dazu ausgebildet, die Ausrichtung (bzw. Orientierung), die Position oder die Pose von einem an der ersten Ablagestelle platzierten unverarbeiteten Werkstück zu bestimmen. Die Pose, d.h. beides Position und Ausrichtung, der unverarbeiteten Werkstücke ist nicht unbedingt genau definiert, da sie auch nur grob an der ersten Ablagestelle abgelegt werden können und verschiedene unverarbeitete Werkstücke nebeneinander oder übereinander dort liegen. Insbesondere ist ein genaues Greifen eines gewünschten unverarbeiteten Werkstücks besonders vorteilhaft durch die Erkennung der Pose und der x-y-z-Verfahrbarkeit des Lastenträgers sowie durch die Drehbarkeit der Greifvorrichtung relativ zum Lastenträger ermöglicht.

Insbesondere ist das Überwachungssystem dazu ausgebildet, zumindest eines von einer Ausrichtung, einer Position und einer Pose von einem auf der Bearbeitungsmaschine platzierten verarbeiteten Werkstück zu bestimmen.

Insbesondere ist das Überwachungssystem dazu ausgebildet, eine Beschaffenheit des verarbeiteten Werkstücks zu erfassen. Unter Beschaffenheit sind insbesondere die äusseren Dimensionen und der Verarbeitungszustand zu verstehen. Die Steuervorrichtung kann zudem dazu ausgebildet sein, den Gerätesatz dazu anzuweisen in Abhängigkeit des erfassten verarbeiteten Werkstücks, insbesondere dessen Beschaffenheit, eine andere Greifvorrichtung anzulegen. Dafür kann ein Greifvorrichtungsmagazin vorgesehen sein, insbesondere vom Gerätesatz umfasst sein, wobei der Gerätesatz dazu ausgebildet ist, die Greifvorrichtung vom Lastenträger abzulösen und eine andere Greifvorrichtung anzubringen. Dies kann nützlich sein, wenn das verarbeitete Werkstück ein Los aus vielen sehr kleinen ausgeschnittenen Bauteilen und das Restteil umfasst und eine als Sauggreifer ausgeführte Greifvorrichtung mangels ausreichender Saugnapfdichte zum Abtransport zur zweiten Ablagestelle nicht geeignet ist. In diesem Falle würde die Steuervorrichtung einen Greifvorrichtungswechsel vollziehen, sodass etwa automatisiert ein Gabel- oder ein Magnetgreifer an den Lastenträger angeschlossen wird, der dann für den Abtransport verwendet wird.

In manchen Ausführungsformen umfasst das Überwachungssystem mindestens einen ortsfest montierten oder an einem beweglichen Teil des Krans montierten Radarsensor oder Lidarsensor. Der mindestens eine Radar- oder Lidarsensor kann zur I<ollisionsvermeidung und/oder zum Mapping der Umgebung eingesetzt werden.

Insbesondere kann der mindestens eine Sensor am Lastenträger, an einer Rotationseinheit, an der Greifvorrichtung oder am Kran, insbesondere an einer Brücke des Krans angeordnet sein.

Insbesondere weist der Gerätesatz mehrere Sensoren auf. Beispielsweise sind zwei Sensoren (z.B. Videokamera) an der Greifvorrichtung angeordnet, um eine Stereoperspektive zu ermöglichen. Diese Sensoren an der Greifvorrichtung sind dazu ausgebildet, eine Ausrichtung und/oder Position der Greifvorrichtung relativ zur Umgebung zu erfassen. Insbesondere sind diese Sensoren zusätzlich oder alternativ dazu ausgebildet, eine Ausrichtung und/oder Position einer momentan gegriffenen und zu transportierenden Ladung (unverarbeitetes Werkstück oder verarbeitetes Werkstück) zu erfassen. Insbesondere sind diese Sensoren zusätzlich oder alternativ dazu ausgebildet, eine Ausrichtung und/oder Position der ersten Ablagestelle, der zweiten Ablagestelle und/oder der Bearbeitungsmaschine, insbesondere eines Maschinentischs der Bearbeitungsmaschine, zu erfassen.

Insbesondere weist der Kran zusätzlich oder alternativ mindestens einen Sensor (z.B. Radarsensor) auf, der dazu ausgebildet ist, die Greifvorrichtung zu überwachen. Speziell kann dieser am Kran angeordnete Sensor dazu ausgebildet sein, eine Pendelbewegung der Greifvorrichtung zu erfassen. Basierend auf der erfassten Pendelbewegung kann die Steuervorrichtung dazu ausgebildet sein, den Lastenträger derart anzusteuern, dass die Pendelbewegung minimiert wird. Alternativ oder zusätzlich kann dieser mindestens eine am Kran angeordnete Sensor dazu ausgebildet sein, die unverarbeiteten oder verarbeiteten Werkstücke zu erfassen, insbesondere deren Ausrichtung und/oder Position.

In manchen Ausführungsformen umfasst das Überwachungssystem einen Codescanner, der dazu ausgebildet ist, einen Code auf einem unverarbeiteten Werkstück einzulesen, wobei die Steuervorrichtung dazu ausgebildet ist, aufgrund des eingelesenen Codes mindestens eines aus der folgenden Gruppe zu bestimmen: (a) die erste Ablagestelle, (b) die erste Orientierung, (c) die Bearbeitungsmaschine, insbesondere deren Ort oder Pose, (d) die zweite Ablagestelle und (e) die zweite Orientierung.

Insbesondere kann das Überwachungssystem alternativ oder zusätzlich dazu ausgebildet sein, eine Beschriftung, insbesondere eine handschriftliche oder maschinelle Beschriftung, die auf dem unverarbeiteten Werkstück aufgebracht ist, einzulesen, wobei die Steuervorrichtung dazu ausgebildet ist, aufgrund der eingelesenen Beschriftung mindestens eines aus der folgenden Gruppe zu bestimmen: (a) die erste Ablagestelle, (b) die erste Orientierung, (c) die zweite Ablagestelle und (d) die zweite Orientierung.

Insbesondere ist der Gerätesatz bzw. die Steuervorrichtung dazu ausgebildet, die x-y-z-Position der Greifvorrichtung und/oder eine z-Rotation der Greifvorrichtung anzupassen.

In manchen Ausführungsformen ist das Überwachungssystem zur Lageerkennung der unverarbeiteten Werkstücke ausgebildet.

Insbesondere ist das Überwachungssystem dazu ausgebildet, die unverarbeiteten Werkstücke zu lokalisieren und insbesondere deren Ausrichtung zu erfassen, bevorzugt anhand eines feature detection and matching Algorithmus. Alternativ oder zusätzlich ist das Überwachungssystem zur Umrisserkennung der unverarbeiteten und/oder verarbeiteten Werkstücke ausgebildet.

In manchen Ausführungsformen weist der Gerätesatz eine Rotationseinheit auf, mittels der die Greifvorrichtung gegenüber dem Lastenträger motorisiert um die z-Achse drehbar ist.

Insbesondere ist die Steuervorrichtung signaltechnisch mit der Rotationseinheit verbunden.

Die Erfindung betrifft weiterhin eine Anlage zum Beschicken und Entladen einer Bearbeitungsmaschine aufweisend: (a) einen Gerätesatz nach der Beschreibung hierin und (b) den erwähnten fernsteuerbaren Kran mit dem verfahrbaren Wagen und dem Lastenträger, der an dem Hubseil von dem Wagen herunterhängt.

Insbesondere ist der Kran als Brückenkran ausgebildet. Solche Brückenkrane sind häufig in Produktionshallen ohnehin anzutreffen. Ein Brückenkran weist mindestens eine Brücke auf, die sich mit ihren beiden Enden im oberen Teil der Produktionshalle auf zwei Führungen abstützt. Entlang dieser Führungen ist die Brücke durch die Produktionshalle motorisiert und gesteuert durch die Steuervorrichtung verfahrbar.

Das Hubseil, an welchem der Lastenträger herunterhängt, kann durch eine motorisierte Seiltrommel direkt auf- und abwickelbar ausgebildet sein. Alternativ ist das Hubseil um mindestens eine Umlenkrolle bzw. Seilrolle geführt, mit welcher der Lastenträger direkt oder indirekt verbunden ist, womit das Flaschenzugprinzip anhand eines Hubwerks mit Seiltrommel und ggf. weiteren Umlenkrollen verwirklicht ist.

Insbesondere ist das Hubwerk in dem verfahrbaren Wagen angeordnet, welcher insbesondere als Laufkatze ausgebildet ist.

In manchen Ausführungsformen ist der Lastenträger als ein Kranhaken des Krans ausgebildet und die Greifvorrichtung mittels eines Adapters am Kranhaken befestigbar.

Insbesondere kann der Adapter dazu ausgebildet sein, eine relative Bewegung zwischen Krankhaken und Greifvorrichtung zu minimieren oder zu verhindern.

Insbesondere ist der Krankhaken an einem Verbindungselement befestigt, das zwei Umlenkrollen miteinander verbindet, wobei die Umlenkrollen jeweils von einem Seil umschlungen vom verfahrbaren Wagen herunterhängen. Alternativ kann der Krankhaken an zwei Zapfen befestigt sein, welche axial von einer Umlenkrolle beidseitig überstehen, welche Umlenkrolle von einem Seil umschlungen vom verfahrbaren Wagen herunterhängt.

In manchen Ausführungsformen ist die Steuervorrichtung zur Ausführung eines Computerprogramms ausgebildet, in welchem zumindest eines aus der folgenden Gruppe hinterlegt ist: (a) Daten zum Bearbeitungsauftrag, (b) Koordinaten der ersten Ablagestelle, (c) Koordinaten der Bearbeitungsmaschine, (d) Koordinaten der zweiten Ablagestelle, (e) Algorithmen zum Positionieren der Greifvorrichtung zur ersten Ablagestelle, (f) Algorithmen zum Positionieren der Greifvorrichtung zur Bearbeitungsmaschine, (g) Algorithmen zum Positionieren der Greifvorrichtung zur zweiten Ablagestelle, (h) Algorithmen zum Ausrichten der Greifvorrichtung auf die Orientierung des unverarbeiteten Werkstücks, (i) Algorithmen zum Erfassen und Loslassen des unverarbeiteten Werkstücks mit der Greifvorrichtung, und (j) Algorithmen zum Erfassen und Loslassen des verarbeiteten Werkstücks mit der Greifvorrichtung.

Insbesondere enthält das Computerprogramm Befehle, die bewirken, dass die Bearbeitungsaufträge abgearbeitet werden. Die Bearbeitungsaufträge enthalten beispielsweise Schneidprozessschritte sowie Informationen zum zu verwendenden unverarbeiteten Werkstück.

Insbesondere enthalten die Daten zum Bearbeitungsauftrag eine Sollausrichtung des unverarbeiteten Werkstücks auf der Bearbeitungsmaschine. Dementsprechend ist der Gerätesatz bzw. die Anlage bzw. der automatisierte Maschinenbetrieb anweisbar, die unverarbeiteten Werkstücke in der Sollausrichtung auf der Bearbeitungsmaschine abzulegen.

Insbesondere enthalten die Daten zum Bearbeitungsauftrag eine Sollausrichtung des unverarbeiteten Werkstücks auf der ersten Ablagestelle. Dementsprechend ist der Gerätesatz bzw. die Anlage bzw. der automatisierte Maschinenbetrieb anweisbar, die unverarbeiteten Werkstücke in der verlangten Ausrichtung auf der ersten Ablagestelle abzulegen.

Insbesondere können die Daten zum Bearbeitungsauftrag auch eine Reihenfolge bzw. Ordnung der auf der ersten Ablagestelle abgelegten unverarbeiteten Werkstücke enthalten. Damit hat die Steuervorrichtung Informationen darüber, welches unverarbeitete Werkstück das momentan oben aufliegende ist.

Insbesondere ist dann auch in den Daten zum Bearbeitungsauftrag hinterlegt, auf welcher von einer Vielzahl von Bearbeitungsmaschinen das nächste, d.h. oben aufliegende, unverarbeitete Werkstück abzulegen ist. Alternativ weisen die unverarbeiteten Werkstücke wie oben erwähnt eine Art von Code auf, welcher über einen Codescanner seitens des Gerätesatzes bzw. er Anlage bzw. des automatisierten Maschinenbetriebs eingelesen werden kann. Der eingelesene Code macht dann die oben genannten Informationen verfügbar.

Die Erfindung betrifft weiterhin einen automatisierten Maschinenbetrieb zum Beschicken und Entladen einer Bearbeitungsmaschine aufweisend: (a) eine Anlage nach der Beschreibung hierin, (b) eine Produktionshalle, in welcher der Kran angeordnet ist, und (c) die Bearbeitungsmaschine, welche in der Produktionshalle angeordnet ist.

Insbesondere weist der Maschinenbetrieb eine Vielzahl, insbesondere unterschiedlicher, in der Produktionshalle angeordnete Bearbeitungsmaschinen auf.

Insbesondere ist die Steuervorrichtung signaltechnisch mit der mindestens einen Bearbeitungsmaschine verbunden.

Insbesondere kann ein Maschinentisch der Bearbeitungsmaschine mehrere Nuten aufweisen, in welche etwa die Zinken eines Gabelgreifer für den Greifvorgang eintauchen können.

Insbesondere kann die erste Ablagestelle und/oder die zweite Ablagestelle durch eine Markierung am Boden der Produktionshalle oder auf einer Palette oder einem Transportwagen markiert sein. Eine solche Markierung ist dazu geeignet, von dem Überwachungssystem detektiert zu werden, insbesondere lokalisiert zu werden. Andersherum gesagt kann das Überwachungssystem dazu ausgebildet sein, die Markierung zu detektieren. Somit ist die erste Ablagestelle und/oder die zweite Ablagestelle zumindest grob auch von Weitem detektierbar.

In manchen Ausführungsformen ist die Bearbeitungsmaschine als eine Schneidmaschine, insbesondere eine Laserschneidmaschine, eine Wasserstrahlschneidmaschine oder eine Plasmaschneidmaschine ausgebildet.

Insbesondere ist das unverarbeitete Werkstück als ein Blech, eine Platte, ein Rohr oder ein Träger ausgebildet. Das Material des Werkstücks kann ein Metall, ein Kunststoff oder ein Zellstoff sein.

In manchen Ausführungsformen ist die erste Ablagestelle und/oder die zweite Ablagestelle als eine Bodenfläche der Produktionshalle neben der Bearbeitungsmaschine ausgebildet ist, insbesondere wobei die Bodenfläche eine Verkehrsfläche ist. Da der erfindungsgemässe Maschinenbetrieb insbesondere dann seine Anwendung findet, wenn in der Produktionshalle kein Personal anwesend ist, kann die Fläche, die sonst als Verkehrsfläche vorgesehen ist, als Ablagestelle ausgenutzt werden.

In manchen Ausführungsformen ist die zweite Ablagestelle als eine Ladefläche eines Transportwagens, insbesondere eines autonomen Transportwagens, ausgebildet, wobei der automatisierte Maschinenbetrieb den Transportwagen umfasst.

Insbesondere ist die Steuervorrichtung signaltechnisch mit dem autonomen Transportwagen verbunden.

Insbesondere kann die zweite Ablagestelle als eine Palette oder eine Ladefläche eines manuellen Transportwagens (z.B. ein Hubwagen) ausgebildet sein.

Insbesondere ist der (manuelle oder autonome) Transportwagen oder die Palette auf einer Bodenfläche der Produktionshalle neben der Bearbeitungsmaschine parkiert, welche Bodenfläche im Speziellen eine Verkehrsfläche sein kann.

Insbesondere können auf diese Weise am Ende einer Schicht des automatisierten Maschinenbetriebs (z.B. am nächsten Morgen nach der automatischen Nachtschicht) die verarbeiteten Werkstücke gleich abtransportiert werden, z.B. manuell oder mit einem Gabelstapler.

Die Erfindung betrifft weiterhin ein Verfahren zum Beschicken und Entladen einer Bearbeitungsmaschine mit einem automatisierten Maschinenbetrieb nach der Beschreibung hierin, aufweisend die Schritte: (a) Positionieren der Greifvorrichtung zur ersten Ablagestelle mittels des Krans, (b) Greifen des unverarbeiteten Werkstücks mit der Greifvorrichtung von der ersten Ablagestelle, (c) Positionieren der Greifvorrichtung zur Bearbeitungsmaschine, (d) Loslassen des unverarbeiteten Werkstücks mit der Greifvorrichtung an der Bearbeitungsmaschine, (e) Greifen des verarbeiteten Werkstücks mit der Greifvorrichtung von der Bearbeitungsmaschine, (f) Positionieren der Greifvorrichtung zur zweiten Ablagestelle, (g) Loslassen des verarbeiteten Werkstücks mit der Greifvorrichtung an der zweiten Ablagestelle.

Insbesondere enthält das zuvor erwähnte Computerprogramm Befehle, die bewirken, dass der zuvor erwähnte Gerätesatz bzw. die zuvor erwähnte Anlage bzw. der zuvor erwähnte automatisierte Maschinenbetrieb die Schritte des besagten Verfahrens ausführt.

### Kurze Beschreibung der Zeichnungen

Weitere Vorteile der vorliegenden Erfindung sind aus der detaillierten Beschreibung und den Zeichnungen ersichtlich.
Figuren 1 und 2 sind eine perspektivische Ansicht eines Gerätesatzes bzw. einer Anlage gemäss einer beispielhaften Ausführungsform der vorliegenden Erfindung;
Figur 3 zeigt eine beispielhafte Beschickung mit der Anlage aus den Figuren 1 und 2; und
Figuren 4 und 5 zeigen eine beispielhafte Greifvorrichtung in zwei verschiedenen Zuständen.

### Wege zur Ausführung der Erfindung

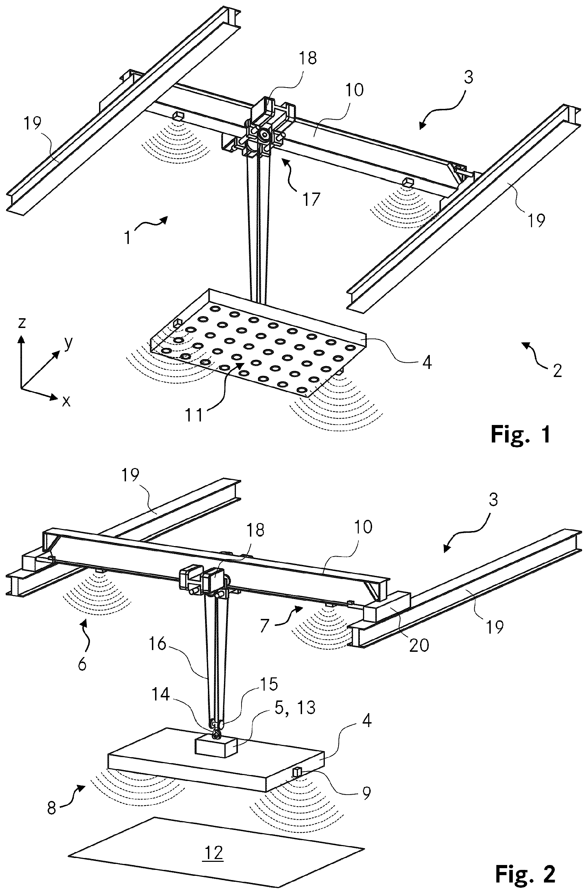

Figuren 1 und 2 zeigen aus zwei verschiedenen Perspektiven einen beispielhaften Gerätesatz 1 bzw. eine beispielhafte Anlage 2, die den Gerätesatz 1 und einen fernsteuerbaren Brückenkran 3 umfasst.

Der Gerätesatz 1 umfasst eine Greifvorrichtung 4, ein Überwachsungssystem und eine Steuervorrichtung 5. Das Überwachungssystem umfasst die Sensoren 6, 7, 8 und 9. Die Sensoren 6 und 7 sind an der Brücke 10 des Brückenkrans 3 angeordnet und die Sensoren 8 und 9 an der Greifvorrichtung 4.

Die Greifvorrichtung 4 hat im hier gezeigten Beispiel eine Vielzahl an Saugnäpfen 11, die in ihrer Gesamtheit und mit der geeigneten Pneumatik als Sauggreifer fungieren. In Figur 2 ist ein Blech als ein unverarbeitetes Werkstück 12 gezeigt, welches mit den Saugnäpfen 11 gegriffen werden kann. Die Greifvorrichtung 4 weist eine Rotationseinheit 13 auf, mittels derer sie um eine z-Achse, d.h. um die Vertikale, gedreht werden kann relativ zum Kran bzw. zur Umgebung. Im gezeigten Beispiel ist die Steuervorrichtung 5 im Gehäuse der Rotationseinheit 13 untergebracht. Die Steuervorrichtung 5 kann sich jedoch auch an anderen Orten innerhalb einer Produktionshalle befinden dank drahtloser Kommunikation.

Die Rotationseinheit 13 ist mit einem Adapter ausgerüstet, in welchen sich der Haken 14 vom Kran 3 passgenau einklinken kann. Dadurch ist der Haken 14 verdrehsicher mit der Rotationseinheit 13 verbindbar. Der Haken 14 ist mit einer Welle verbunden, an der endseitig zwei Umlenkrollen 15 drehbar gelagert sind. Die Rollen 15 sind jeweils von einem Hubseil 16 eines Elektroseilzugs 17 umschlungen. Der Elektroseilzug 17 ist in einem als Laufkatze ausgebildeten verfahrbaren Wagen 18 integriert, wobei die Laufkatze 18 zum Verfahren entlang der Brücke 10 (x-Richtung) und zum Anheben und Absenken (z-Richtung) des Hakens 14 ausgebildet ist. Der Brückenkran 3 umfasst zwei Fahrwerksträger 19, die Kranbrücke 10 und die Laufkatze 18. Die Brücke 10 ist mittels wenigstens eines Motors 20 zum Verfahren entlang der Fahrwerksträger 19 (y-Richtung) ausgebildet. Damit deckt der Lastenträger, d.h. der Haken 14, einen vorgegebenen Arbeitsbereich in x-y-z-Richtung in einer Produktionsumgebung ab. Diese x-y-z-Translationen werden ebenso wie die Rotation der Greifvorrichtung 4 um die z-Achse von der Steuervorrichtung 5 gesteuert, insbesondere auf Basis von Sensordaten, die durch das Überwachungssystem gewonnen werden. Manche Sensoren können auch auf den Fahrwerksträgern 19 angeordnet sein, um etwa eine permanente Überwachung des x-y-z-Raums des Gerätesatzes zu ermöglichen, dies auch mit Videokamera(s) und/oder Radar-/Lidar-Sensor(en).

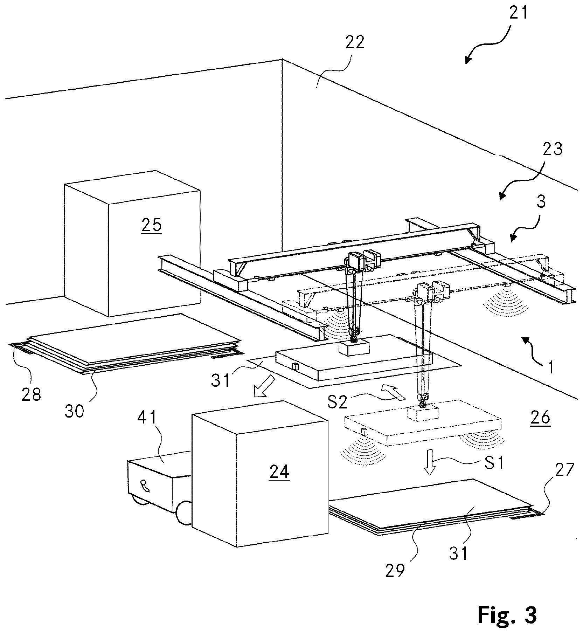

Figur 3 zeigt eine Ausführungsform eines automatisierten Maschinenbetriebs 21. Im folgenden beziehen sich die Bezugszeichen zum Teil auf Figuren 1 und/oder 2. Der Maschinenbetrieb 21 umfasst die Produktionshalle 22, die Anlage 23 sowie eine erste Bearbeitungsmaschine 24 (abstrahiert gezeigt) und eine zweite Bearbeitungsmaschine 25 (abstrahiert gezeigt). Die Anlage 23 umfasst den Gerätesatz 1 und den Kran 3 aus den Figuren 1 und 2 und ist hier bei der Beschickung gezeigt. Es ist Nacht und jegliche Mitarbeiter haben die Produktionshalle verlassen. Der Arbeitsbereich 26, welcher tagsüber als Transportweg genutzt werden, ist nun leer. Jeder Bearbeitungsmaschine sind markierte Ablagestellen 27, 28 zugeordnet, die sich im Bereich 26 befinden und somit tagsüber freibleiben müssen. Dort können am Ende der Tagesschicht bereits stapelweise Werkstücke 29, 30 abgeladen werden.

In einem ersten Schritt S1 wird die Greifvorrichtung zur ersten Ablagestelle verfahren. Für ein grobes Anfahren/Positionieren können die Koordinaten der Ablagestelle 27 hinterlegt sein oder die Sensoren 6, 7, 8, 9 (siehe Figur 2) erfassen die Ablagestelle 27 von weitem und tracken sie bis ein feines Anfahren/Positionieren initiiert wird. Hierfür erfassen die Sensoren das oben aufliegende Werkstück 31. Insbesondere wird dessen Position und Ausrichtung (gemeinsam auch Pose genannt) erkannt und ggf. ein auf dem Werkstück aufgebrachter Code gescannt, z.B. durch einen der Sensoren, der eine Kamera ist oder einen Laserscanner aufweist. Durch scannen des Codes kann verifiziert werden, dass es sich um das korrekte Werkstück handelt, welches als nächstes auf der Maschine 24 bearbeitet werden soll. Eine Bearbeitungsreihenfolge bzw. ein Plan mit Bearbeitungsaufträgen kann für die Steuervorrichtung 5 abrufbar bereitgestellt sein. Sollte das zu greifende Werkstück nicht präzise auf dem Stapel abgelegt worden sein, kann nun die Rotationseinheit 13 die Greifvorrichtung 4 falls nötig rotieren, damit das Werkstück 31, hier ein Blech, so mit dem Saugnäpfen 11 gegriffen werden kann, dass eine gewünschte Ausrichtung des unverarbeiteten Werkstücks 31 relativ zum x-y-z-Koordinatensystems besteht.

In einem nächsten Schritt S2 wird das Blech 31 aufgegriffen und transportiert in Richtung einer der Bearbeitungsmaschine 24, insbesondere einem Maschinentisch (nicht gezeigt) der Bearbeitungsmaschine 24. Auf dem Weg dorthin kann bereits eine nötige Rotation um die z-Achse erfolgen, um sich der Zielausrichtung an der Bearbeitungsmaschine 24 anzunähern. In einem dritten Schritt S3 wird von der Steuervorrichtung 5 gesteuert und unter Berücksichtigung der Sensordaten des Überwachungssystems das unverarbeitete Werkstück präzise zur Bearbeitungsmaschine gefahren und losgelassen.

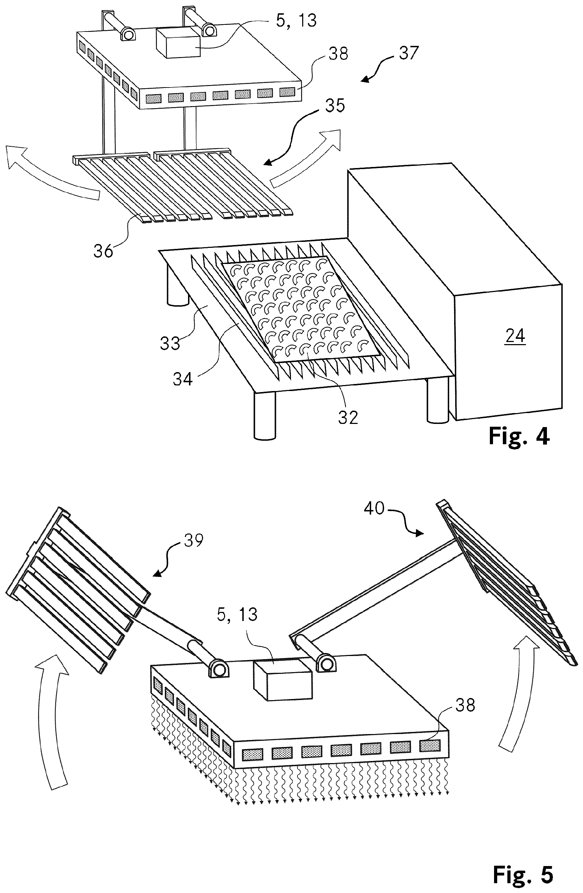

Wann immer eine Bearbeitungsmaschine bereit ist, ein neues unverarbeitetes Werkstück zu empfangen, wird die Steuervorrichtung 5 den Gerätesatz 1 bzw. die Anlage 23 anweisen, die Beschickung wie erwähnt durchzuführen. Ein Abtransportieren verarbeiteter Werkstücke läuft dann ähnlich ab, wobei je nach Beschaffenheit ggf. zusätzliche Elemente an der Greifvorrichtung bzw. alternative Greifvorrichtungen nötig sind. So kann z.B., wie in den Figuren 4 und 5 gezeigt, die Greifvorrichtung 37 multifunktional sein. Auch kann in der Produktionshalle ein Wechselmagazin (nicht gezeigt) vorgesehen sein, mit welchem der Gerätesatz bzw. die Anlage selbstständig, d.h. automatisiert, einen Wechsel der Greifvorrichtung durchführen kann. Im gezeigten Fall ist die Rotationseinheit 13 von der Greifvorrichtung lösbar gestaltet. Die Greifvorrichtung 4 aus den Figuren 1 bis 3 wurde ersetzt durch die hier gezeigte Greifvorrichtung 37, die einen Gabelgreifer 35 und einen Magnetgreifer 38 umfasst.

In Figur 4 ist ein verarbeitetes Werkstück 32 auf dem Maschinenbett 33 der Maschine 24 liegend gezeigt. Das Maschinenbett 33 hat Nuten 34, in welche der Gabelgreifer 35 eintauchen und somit unter das Werkstück gelangen kann. Das verarbeitete Werkstück 32 weist eine Vielzahl an kleinen ausgeschnittenen Teilen und das noch umgebende Restblech auf. Da die ausgeschnittenen Teile durch einen vollständigen Schnitt ganz vom Restblech gelöst sind, besteht die Gefahr, dass einige von ihnen durch die Gabelzinken 36 des Gabelgreifers herunterfallen könnten. Bei grösseren ausgeschnittenen Teilen wäre dies kein Problem. Aufgrund der Kenntnis darüber, welche Geometrie die einzelnen Elemente des verarbeiteten Werkstücks 32, d.h. Restteil(e) und Bauteil(e), haben, kann die Steuervorrichtung 5 darüber entscheiden, wie das verarbeitete Werkstück 32 gegriffen werden kann bzw. soll. Dies wird nach geometrischen Kriterien (z.B. kleinster Durchmesser oder Umfang) entschieden.

Im gezeigten Fall bestimmt die Steuervorrichtung 5, dass der Gabelgreifer 35 der Greifvorrichtung 37 nicht geeignet ist. Gleichzeitig ist bekannt, dass das vorliegende Werkstück 32 ferromagnetisch ist. Die Greifvorrichtung 37 wird daher transformiert, wie in Figur 5 gezeigt. Der Gabelgreifer 35 ist zweigeteilt und symmetrisch, um Ungleichgewichte zu vermeiden. Beide Teile 39 und 40 sind rotierbar an der Oberseite der Greifvorrichtung 37 gelagert und können nach oben ausschwenken, um dem Magnetgreifer 38 Zugang nach unten freizugeben. Damit kann das verarbeitete Werkstück 32 nun gegriffen und anschliessend zur zweiten Ablagestelle transportiert werden. welche hier ein Transportwagen 41 ist (siehe Figur 3).

Die Erfindung wurde zwar anhand ihrer bevorzugten Ausführungsform(en) erläutert, doch es können viele weitere Änderungen und Variationen vorgenommen werden, ohne über den Umfang der vorliegenden Erfindung hinauszugehen. Daher ist es vorgesehen, dass die beiliegenden Patentansprüche Änderungen und Variationen abdecken, die im tatsächlichen Umfang der Erfindung enthalten sind.

**Bezugszeichenliste**

| | | | |
|---|---|---|---|
| 1 | Gerätesatz | 23 | Anlage |
| 2 | Bearbeitungsmaschine | 24 | Erste Bearbeitungsmaschine |
| 3 | Brückenkran | 25 | Zweite Bearbeitungsmaschine |
| 4 | Greifvorrichtung | 26 | Arbeitsbereich |
| 5 | Steuervorrichtung | 27 | Erste Ablagestellen |
| 6 | Sensor | 28 | Erste Ablagestellen |
| 7 | Sensor | 29 | Werkstückstapel |
| 8 | Sensor | 30 | Werkstückstapel |
| 9 | Sensor | 31 | Unverarbeitetes Werkstück |
| 10 | Kranbrücke | 32 | Verarbeitetes Werkstück |
| 11 | Saugnäpfe | 33 | Maschinenbett |
| 12 | Unverarbeitetes Werkstück | 34 | Nuten |
| 13 | Rotationseinheit | 35 | Gabelgreifer |
| 14 | Haken | 36 | Gabelzinken |
| 15 | Rollen | 37 | Greifvorrichtung |
| 16 | Hubseile | 38 | Magnetgreifer |
| 17 | Elektroseilzugs | 39 | Gabelgreiferteil |
| 18 | Laufkatze | 40 | Gabelgreiferteil |
| 19 | Fahrwerksträger | 41 | Transportwagen |
| 20 | Motor | S1 | Erster Schritt |
| 21 | Maschinenbetriebs | S2 | Zweiter Schritt |
| 22 | Produktionshalle | S3 | Dritter Schritt |

## Patentansprüche

1. Gerätesatz (1) zum Beschicken und Entladen einer Bearbeitungsmaschine (2) aufweisend:
eine Greifvorrichtung (4,37), die an einem Lastenträger (14) anbringbar, ferngesteuert aktivierbar und motorisiert um eine z-Achse drehbar ausgebildet ist, wobei der Lastenträger (14) an einem Hubseil (16) von einem verfahrbaren Wagen (18) eines fernsteuerbaren Krans (3) herunterhängt, so dass mit dem Lastenträger (14) ein vorgegebener Arbeitsbereich in x-y-z-Richtung abgedeckt wird,
ein Überwachungssystem (6,7,8,9) ausgebildet zum Erfassen des vorgegebenen Arbeitsbereichs (26),
eine Steuervorrichtung (5), die signaltechnisch mit dem Überwachungssystem (6,7,8,9), mit dem Kran (3) und mit der Greifvorrichtung (4,37) verbunden ist, und die dazu ausgebildet ist,
den Lastenträger (14) an eine gewünschte Position im Arbeitsbereich (26) zu fahren,
die Greifvorrichtung (4,37) zu aktivieren und um die z-Achse zu drehen und
den Kran (3) und die Greifvorrichtung (4,37) entsprechend einem Bearbeitungsauftrag derart anzusteuern, dass zum Beschicken einer Bearbeitungsmaschine (24,25) ein unverarbeitetes Werkstück (12,31) von einer ersten Ablagestelle (27,28) im Arbeitsbereich (26) zur Bearbeitungsmaschine (24,25) gebracht und dort in einer ersten Orientierung abgelegt wird, und dass zum Entladen der Bearbeitungsmaschine (24,25) ein verarbeitetes Werkstück (32) von der Bearbeitungsmaschine (24,25) zu einer zweiten Ablagestelle (41) im Arbeitsbereich (26) gebracht und dort in einer zweiten Orientierung abgelegt wird.

2. Gerätesatz (1) nach Anspruch 1, wobei die Greifvorrichtung (4,37) zumindest einen von einem Sauggreifer (4), einem Gabelgreifer (35) und einem Magnetgreifer (38) umfasst.

3. Gerätesatz (1) nach einem der vorangehenden Ansprüche, wobei das Überwachungssystem (6,7,8,9) mindestens eine ortsfest montierte oder an einem beweglichen Teil des Krans montierte Videokamera (6,7,8,9) umfasst.

4. Gerätesatz (1) nach einem der vorangehenden Ansprüche, wobei das Überwachungssystem mindestens einen ortsfest montierten oder an einem beweglichen Teil des Krans (3) montierten Radarsensor oder Lidarsensor umfasst.

5. Gerätesatz (1) nach einem der vorangehenden Ansprüche, wobei das Überwachungssystem (6,7,8,9) einen Codescanner umfasst, der dazu ausgebildet ist, einen Code auf einem unverarbeiteten Werkstück (12,31) einzulesen, wobei die Steuervorrichtung (5) dazu ausgebildet ist, aufgrund des eingelesenen Codes mindestens eines aus der folgenden Gruppe zu bestimmen:
die erste Ablagestelle (27,28),
die erste Orientierung,
die Bearbeitungsmaschine (24,25),
die zweite Ablagestelle (41) und
die zweite Orientierung.

6. Gerätesatz (1) nach einem der vorangehenden Ansprüche, wobei das Überwachungssystem (6,7,8,9) zur Lageerkennung der unverarbeiteten Werkstücke (12,31) ausgebildet ist.

7. Gerätesatz (1) nach einem der vorangehenden Ansprüche, aufweisend eine Rotationseinheit (13), mittels der die Greifvorrichtung (4,37) gegenüber dem Lastenträger (14) motorisiert um die z-Achse drehbar ist.

8. Anlage (23) zum Beschicken und Entladen einer Bearbeitungsmaschine (24,25) aufweisend:
den Gerätesatz (1) nach einem der vorangehenden Ansprüche,
den fernsteuerbaren Kran (3) mit dem verfahrbaren Wagen (18) und dem Lastenträger (14), der an dem Hubseil (16) von dem Wagen(18) herunterhängt.

9. Anlage (23) nach Anspruch 8, wobei der Lastenträger (14) als ein Kranhaken des Krans (3) ausgebildet ist und die Greifvorrichtung (4,37) mittels eines Adapters am Kranhaken (14) befestigbar ist.

10. Anlage (23) nach Anspruch 8 oder 9, wobei die Steuervorrichtung (5) zur Ausführung eines Computerprogramms ausgebildet ist, in welchem zumindest eines aus der folgenden Gruppe hinterlegt ist:
Daten zum Bearbeitungsauftrag,
Koordinaten der ersten Ablagestelle (27,28),
Koordinaten der Bearbeitungsmaschine (24,25),
Koordinaten der zweiten Ablagestelle (41),
Algorithmen zum Positionieren der Greifvorrichtung (4,37) zur ersten Ablagestelle (27,28),
Algorithmen zum Positionieren der Greifvorrichtung (4,37) zur Bearbeitungsmaschine,
Algorithmen zum Positionieren der Greifvorrichtung (4,37) zur zweiten Ablagestelle,
Algorithmen zum Ausrichten der Greifvorrichtung (4,37) auf die Orientierung des unverarbeiteten Werkstücks (12,31),
Algorithmen zum Erfassen und Loslassen des unverarbeiteten Werkstücks (12,31) mit der Greifvorrichtung (4,37), und
Algorithmen zum Erfassen und Loslassen des verarbeiteten Werkstücks (32) mit der Greifvorrichtung (4,37).

11. Automatisierter Maschinenbetrieb (21) zum Beschicken und Entladen einer Bearbeitungsmaschine (24,25), aufweisend
eine Anlage (23) nach einem der Ansprüche 8 bis 10,
eine Produktionshalle (22), in welcher der Kran (3) angeordnet ist, und
die Bearbeitungsmaschine (24,25), welche in der Produktionshalle (22) angeordnet ist.

12. Automatisierter Maschinenbetrieb (21) nach Anspruch 11, wobei die Bearbeitungsmaschine (24,25) als eine Schneidmaschine, insbesondere eine Laserschneidmaschine, eine Wasserstrahlschneidmaschine oder eine Plasmaschneidmaschine ausgebildet ist.

13. Automatisierter Maschinenbetrieb (21) nach Anspruch 11 oder 12, wobei die erste Ablagestelle (27,28) und/oder die zweite Ablagestelle (41) als eine Bodenfläche der Produktionshalle (22) neben der Bearbeitungsmaschine (24,25) ausgebildet ist, insbesondere wobei die Bodenfläche eine Verkehrsfläche (26) ist.

14. Automatisierter Maschinenbetrieb (21) nach einem der Ansprüche 11 bis 13, wobei die zweite Ablagestelle (41) als eine Ladefläche eines Transportwagens, insbesondere eines autonomen Transportwagens, ausgebildet ist, wobei der automatisierte Maschinenbetrieb (21) den Transportwagen (41) umfasst.

15. Verfahren zum Beschicken und Entladen einer Bearbeitungsmaschine (24,25) mit einem automatisiertem Maschinenbetrieb (21) nach einem der Ansprüche 11 bis 14, aufweisend die Schritte:
Positionieren der Greifvorrichtung (4,37) zur ersten Ablagestelle (27,28) mittels des Krans (3),
Greifen des unverarbeiteten Werkstücks (12,31) mit der Greifvorrichtung (4,37) von der ersten Ablagestelle (27,28),
Positionieren der Greifvorrichtung (4,37) zur Bearbeitungsmaschine (24,25),
Loslassen des unverarbeiteten Werkstücks (12,31) mit der Greifvorrichtung (4,37) an der Bearbeitungsmaschine (24,25),
Greifen des verarbeiteten Werkstücks (32) mit der Greifvorrichtung (4,37) von der Bearbeitungsmaschine (24,25),
Positionieren der Greifvorrichtung (4,37) zur zweiten Ablagestelle (41),
Loslassen des verarbeiteten Werkstücks (32) mit der Greifvorrichtung (4,37) an der zweiten Ablagestelle (41).
